(19) Europäisches Patentamt / European Patent Office / Office européen des brevets

(11) **EP 2 410 296 A1**

(12) **EUROPEAN PATENT APPLICATION**

(43) Date of publication:
**25.01.2012 Bulletin 2012/04**

(51) Int Cl.:
*G01D 4/00* (2006.01)     *G06Q 10/00* (2012.01)

(21) Application number: **11004874.1**

(22) Date of filing: **15.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.06.2010  AR P000102119**

(71) Applicants:
 • **GAIOLI, Fabian Horacio**
   **Buenos Aires (AR)**
 • **Ventureira, Hugo Bernardo**
   **Buenos Aires (AR)**
 • **Lebas, Gabriel Omar**
   **Buenos Aires (AR)**

 • **Durso, Roberto Omar**
   **Buenos Aires (AR)**

(72) Inventors:
 • **GAIOLI, Fabian Horacio**
   **Buenos Aires (AR)**
 • **Ventureira, Hugo Bernardo**
   **Buenos Aires (AR)**
 • **Lebas, Gabriel Omar**
   **Buenos Aires (AR)**
 • **Durso, Roberto Omar**
   **Buenos Aires (AR)**

(74) Representative: **Rizzo, Sergio**
   **Abogados Daudén, S.L.P.**
   **Avenida Maissonave, 11, 2**
   **ES-03003 Alicante (ES)**

(54) **System for recording carbon dioxide equivalent emissions**

(57)    An instantaneous counting dynamic system and periodic cumulative space-time record of carbon dioxide equivalent emissions is revealed, collecting energy consumption data from conventional measuring systems of each installation, adapting and transmitting them to a multi-transducer, whose processor by means of a software estimates carbon dioxide equivalent emissions associated to that consumption. The signals processed are transmitted to interfaces which generate instant or cumulative digital data, as well as to a remote recording and processing central.

Fig. 1

EP 2 410 296 A1

## EP 2 410 296 A1

**Description**

<u>INTRODUCTION</u>

The present invention consists of an instantaneous counting dynamic system and periodic cumulative space-time record of carbon dioxide equivalent emissions, from fixed or mobile sources, which can be used on any type of installation that uses an energy source that gives rise to the combustion of fossil fuels directly (liquid, solid, gaseous fuels, etc. in thermal equipment, internal combustion engines, etc.) or indirectly (electricity) regardless of the energy source used (whether they are liquid, solid, gaseous fuels, electricity, etc.) allowing also to publish immediately or periodically, either in digital or analog, locally or distributed, private or publicly the counting of the carbon dioxide equivalent emissions ($CO_2e$) linked to energy consumption.

Each load measured (*measurement*) will be transformed by an emission factor (*conversion*) into a $CO_2e$ value. This record will be characterized by the type of installation, the energy source used, the timing (*synchronization*) and measurement site (*location*), the number of units demanded by the energy resource (*identification*) and the amount of $CO_2e$ emitted, and will be stored in a database (*registration*) for processing and subsequent publication and diffusion (*communication*) of information disaggregate or aggregate according to the sectoring required (*integration*).

Besides, this last characteristic would allow, in the case of a systemic application in a compound of the National Energy Balance corresponding to the final energy consumption (Residential, Commercial and Public, Transport, Agriculture and Industry), to obtain the final energy consumption of that compound with higher accuracy.

Additionally, the current invention embodies the simultaneous identification of the agent (individual or collective) demanding the consumption of the energy resource, so as to distribute the $CO_2e$ emissions registered as a unit. For instance, in the case of vehicles or homes the number of individuals will be registered, in freight cargo the load transported will be registered, in an industrial installation the amount of products coming from a production line or process unit, in the air transport the number of passengers, etc.

In this report, a counting dynamic system and a record of carbon dioxide equivalent emissions is revealed, made of a multi-transducer working as interface and transferring data to a hardware device in which a software application estimates the $CO_2e$ associated to the energy consumption, which in turn can be transmitted to a remote database and/or stored in a memory of the system placed in the site that demands the energy resource and that is the source of $CO_2e$ emissions.

Both the multi-transducer devices, hardware and software required for the calculation, as well as the visual interface devices required for the visualization and analysis (screens, clocks, etc.) can be incorporated to the meters and recorders of the energy resource used or be designed independently according to the use assigned to the data obtained.

In order to understand the current invention so that it can be put into practice easily, the following paragraphs will contain a precise description of a preferred embodiment making reference to the illustrative companion drawings, only as an example purely demonstrative but not restrictive of the invention, whose components could be chosen among different equivalent elements while keeping the principles of the invention set forth in this documentation.

<u>STATE OF THE ART</u>

It is universally well-known the concern caused by the excessive emissions of gases called "greenhouse gases", among which the main one is carbon dioxide or $CO_2$

The serious consequences for the climate caused by this excess of gas emissions led the world's major countries to initiate or to commit themselves to initiate emission reduction policies on a large scale.

This good intention faces however the obstacle of emission measurement methods which are incomplete and inaccurate, therefore unreliable to define appropriate policies to reach people and achieve a change of behaviour needed to reduce the current consumption patterns.

Among those defects we could mainly point out that they are indirect measurement methods. In some cases, periodic samples to carry out emission estimates are taken into account, with the usual margin of error this may entail. Sometimes lab tests are performed on a specific product to establish how much (on average use) it will emit, for instance, a new car model. However, the type of fuel used, the gradual engine wear, the frequency and mode in which the vehicle is used, the poor maintenance and many other variables will transform this ideal equation into an altogether different reality that nobody is nowadays able to estimate.

The same applies to the estimated emissions for the transportation of products which are currently done as calculated under assumed kilometres from the place of production to that of consumption and not by methods related to consumption and hence, real emissions.

Household appliances categories A, B, C, D, E are classified according to a consumption efficiency level that becomes theoretical for not being monitored.

The lack of direct data, current and permanent, causes the overall system of actual emission estimates to be limited to aggregated values on a scale that includes large groups of end users (national data, sectoral records, etc.).

Secondly, these are static methods such that, in the absence of instant data to find out permanent variations in consumption, sampling measurements which are merely estimates are used.

Thirdly, a general data analysis is made to deduce particular data ("top-down" methodology) since they do not rely on a breakdown of data available, not having the possibility of including the individual on the accounting, which gives inaccurate and incomplete results, and leaves little room to articulate public and/or private improvement policies, savings and emission reductions.

Finally, these are methods which do not allow one access to own and particular emission data and prevent us to know their contribution (family, neighbourhood, business) and generate a conscious reduction policy.

The proposed invention aims to solve these problems in order to obtain a measurement, direct or indirect, of $CO_2e$ emissions more precise at individual level ("bottom-up" methodology).

Therefore a counting method is suggested, taking actual data permanently and currently, making possible their analysis at the moment emissions occur.

It is also a dynamic method since data could be obtained at all times making possible to account fluctuations in consumption or gas emissions of the unit measured (vehicle, home, factory, etc.) in specific periods of time (daily, seasonal) in order to settle the most accurate reduction policy for each particular case.

Besides, since the starting point was to measure particular data ("bottom-up" methodology) to reach general conclusions, it has a much higher degree of accuracy, reaching the highest degree of disaggregation of information.

Certainly, another unavoidable advantage this invention holds is that since it is a particular measurement, with permanent accessible results for the people involved in the gas emission process, it creates a remarkable awareness of the problem and it allows to deal with it in a daily reality, being able to monitor the results obtained when a particular reduction policy is applied.

The proposed invention seeks a simple, fast and effective solution to carry out precise and permanent emission counts, whether they belong to the industrial, home or transportation sector, obtaining immediate and dated results, thus providing a reliable and immediate information so as to take decisions at government level (as from the particular data obtained that can be accumulated and transmitted at any government level) as well as private level (as from the own control data of every installation measured).

OBJECTIVE

The proposed solution has several specific objectives that are detailed below:

a) Obtain precise data in order to outline the application of public polices to reduce greenhouse gas emissions, both at industrial level as well as, for instance, passengers and/or cargo public transport, taxi fleets and/or remises, residential consumption of electricity, etc.

b) Promote awareness of the problem of greenhouse gas emissions in general population, from the dissemination of this information, which is placed "well at sight" of the users eyes, with permanent objective data on their own impact on this, so that beyond state policies, people learn to self-control emissions.

c) Offer emitting companies objective data enabling them to set up greenhouse gas emission reductions policies to distinguish themselves from other companies according to their commitment with the environment in the framework of their social entrepreneurial responsibility.

The system is able to adapt itself to a great number of applications, among which the main ones are:

1) Planes, trucks, buses, vans and cars and any other type of vehicle or mobile device that produces greenhouse gas emissions (farm equipment, boats, etc.). In this case, the fuel consumption data of the device installed for that purpose is taken, under the type and amount of fuel consumed and/or under the mileage associated with the average speed of each section, and using the mathematical algorithm applied in each case the language of the system developed to run the mathematical calculation is translated and, with the $CO_2e$ data generated, it is transmitted to two displays in the vehicle, one recording data in a permanent and chronological mode and another one which is able to accumulate by sections since it has a storing memory of the data recorded chronologically.

Likewise, data accumulated in both displays can be transmitted through a communication protocol previously agreed to a centralized database, which through a specific program may manage such information.

In parallel passengers data or load transported is taken from people detectors or scales and it is incorporated to the $CO_2e$ register.

2) Homes, repair shops, factories, offices, etc.: In this case the data of electric energy consumption and gas consumption or any other fossil fuel of the corresponding meter installed to that effect is taken and, by placing the device on a control board whether it is integrated or not to the electric energy meter or fuel gauge of a site, it is translated to the language of the system developed by means of the mathematical algorithm to be applied in each case so that with the $CO_2$ generated data, it is transmitted to two displays in the house, repair shop, office, etc.; one of them records in a permanent and chronological way and the other one allows the accumulation by sections since it has a storing memory of the data recorded chronologically, making possible to transmit this information too, in a continuous or at random way, to a database which is able to manage it.

At the same time, people present are taken into account or the amount of product produced making use of people detectors or control boards from the daily production reports, integrating it to the $CO_2$e register.

3) Machinery, equipment, boilers, household appliances, etc.: In this case the data of the electric energy consumption meter installed with this purpose is taken, and is translated to the language of the system developed to run the mathematical calculation, and with the $CO_2$e data generated it is transmitted to two displays as the ones already described, being able to be transmitted as mentioned above.

In parallel, the data of the energy produced whether it is in a heat, mechanical, etc. way is taken from control devices in the equipment which is incorporated to the $CO_2$e register.

DRAWINGS

Find attached to this presentation a figure whose outstanding features are described below.

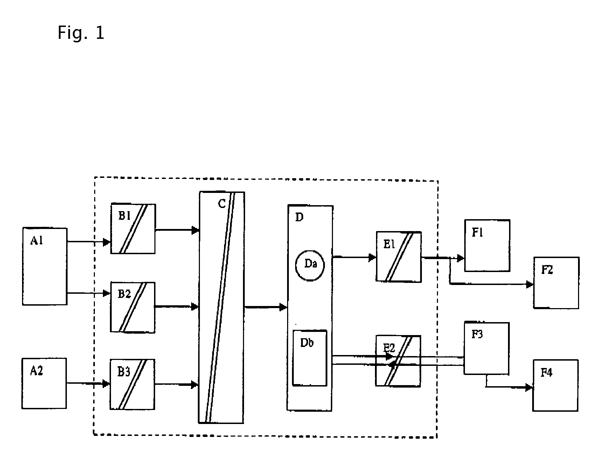

Figure 1) It is named with reference A1) the meter of the energy resource installed or coupled in the equipment measured (flow meter for gases or liquids, gas or electricity home meters, fuel instant consumption meter in vehicles, etc.) and with reference A2) the detector of units demanding the energy resource (people, product, load, etc.).

The dotted box indicates the multi-transducer device. Reference B1) shows a multi-module transducer incoming filtering input signals of analog type and B2) one that filters the digital signals to protect the entire system. Reference B3) indicates the filter input signal from the detector units requiring the energy resource.

Reference C) indicates the multi-transducer block that processes and translates the input signals to be sent to the processor adapted and unified.

Reference D) indicates the processor that manages and directs incoming signal to each output and contains the program or software that calculates, among other parameters, $CO_2$e emissions. Da) indicates the universal clock that allows correlating chronologically the measurements and Db) indicates the necessary memory for the accumulation of data.

Reference F1) shows the interfaces that could be a board, screen, clock, etc. providing instant information and F2) the ones providing cumulative information.

Reference F3) shows the output communication port that allows configurations to the register and the possibility of transmitting each record to a remote processing central referenced as F4).

Reference E1) shows the output filter to the end devices of the $CO_2$e visualization record and E2) indicates an output filter for the communication port and the source that transmits and receives information to/from devices that will afterwards send/receive data through a conventional radio-navigation protocol and system (e.g. GPS, mobile, etc.).

DESCRIPTION OF THE INVENTION

The dynamic system of instant counting and space-time periodical cumulative register of carbon dioxide equivalent emissions proposed works according to the following scheme and components.

For each case the consumption of the energy resource used and the units demanded by the mentioned resource are taken as an entry data and, by means of a multi transducer working as interface, the above data is transferred to a hardware device where a software application estimates the unitary $CO_2$e emission associated to that consumption.

Multi-transducer devices, hardware and software, required for the calculation, as well as the required visual interface devices (displays, clocks, etc.), can be incorporated into the meters and recorders of energy resources used, or they can be designed independently, according to the use assigned to the data obtained.

It starts with the measurement of energy consumption as appropriate. That measurement is made by conventional devices already installed on the equipment (e.g. flow meter for measuring gas consumption or oil in a boiler), meters (e.g. gas or electricity to households by direct reading), vehicles (combination of the flow meter with the fuel tank float with direct reading on the board of the instant fuel consumption), etc.

Hence a signal which can be analog or digital is picked up and it can be directly processed by the sensor that captures the measurement in the input port, or it can be processed to transform it into an appropriate signal for the processor or it can be directly taken by the processor. This depends on the origin and type of the input signal and the existing devices on the equipment to which one wants to calculate the $CO_2e$ emissions. For example, in a modern car, the microprocessor itself that runs the vehicle electronics and manages the final registration of output data observed in the dashboard can embody, along with complementary devices, software lines to calculate $CO_2e$ emissions from fuel consumption measured and reported on the board. In an aircraft, it could consider the processor driving the fuel gauge, which by means of intermediate devices already installed in the aircraft carries information of interest to the passenger communication screen (not only of $CO_2e$ that is responsibility of each passenger but also information about compensations made by the airline and awareness campaigns as well), in addition to current reports on mileage, distance to destination, altitude, airspeed, outside temperature, etc.

The signal is transmitted electrically or with wireless connectivity to a conventional multi-transducer adapted for the proposed system receiving such signal. It goes through the first blocks of the transducer (filters and signal modulators) responsible for processing and adapting these input signals, filter and adapt them to the input configuration of the central processor. The signal passes then to the processor containing the program or software that estimates, among other parameters, the $CO_2e$ emissions. The processor has memories (volatile and non-volatile) for storing data and calculation values and a clock to synchronize the measurements with the cumulative records.

The software device estimates $CO_2e$ emissions based on a formula that considers the consumption of energy resources and multiply it by the carbon dioxide ($CO_2$), methane ($CH_4$) and nitrous oxide ($N_2O$) emission factors in $CO_2e$ units (taking into account the respective global warming potentials) for the burning of fossil fuels or the electric grid emission factor to which the equipment, device or electric meter is connected to.

The generic formula for calculation used to define $CO_2e$ emissions can be expressed as follows:

$$E_{CO_2e} = C_i \times \left( FE_i^{CO_2} + FE_i^{CH_4} \times PCG_{CH_4} + FE_i^{N_2O} \times PCG_{N_2O} \right) = C_i \times FE_i^{CO_2e}$$

where

$E_{CO_2e}$ = $CO_2e$ emission

$C_i$ = consumption of energy resource $i$

$FE_i^{CO_2}$ = $CO_2$ emission factor associated to energy resource i

$FE_i^{CH_4}$ = $CH_4$ emission factor associated to energy resource $i$

$FE_i^{N_2O}$ = $N_2O$ emission factor associated to energy resource i

$PCG_{CH_4}$ = global warming potential of $CH_4$

$PCG_{N_2O}$ = global warming potential of $N_2O$

$FE_i^{CO_2e}$ = $CO_2e$ emission factor associated to energy resource i

The global warming potential is an index based on the radioactive properties of the greenhouse gases that compares the potential impacts caused by the emission of each of them in the climate system in relative terms, using $CO_2$ as the reference unit. When the amount emitted from a greenhouse gas is multiplied by the global warming potential of that gas, the resulting amount is expressed as $CO_2e$.

Emission factors transform energy consumption in $CO_2e$ emissions. Such factors may arise or be calculated from specific data of the energy resource $i$ supplier, from national values (for example, taken from the National Communications of the countries that have ratified the United Nations Framework Convention on Climate Change or taken as values by default or from the most updated version of the Intergovernmental Panel on Climate Change guidelines for the National Inventories of Greenhouse Gases in the case of fossil fuels or calculated from data of the interconnected grid associated to electricity consumption of which one wants to know $CO_2e$ emissions).

Once signals are sent out from the processor, they are transmitted to other systems through interfaces (source, filters, etc.). They may generate a digital signal on a board, screen, clock, etc. whether instantaneous or cumulative, or in an output port that sends, by means of a communication protocol, the information to a remote recording and processing central.

**Claims**

1. Having described and determined the nature of the invention, its scope and how it can be put into practice within its fundamental spirit, the following is declared as the invention and of exclusive property:

   1) INSTANTANEOUS COUNTING DYNAMIC SYSTEM AND PERIODIC CUMULATIVE SPACE-TIME RECORD OF CARBON DIOXIDE EQUIVALENT EMISSIONS **characterized by** being made up of: a connection which takes the energy resource consumption data provided by the conventional measuring system installed in the device to be measured, picking up a signal which can be either analog or digital and sending it to a muti-transducer, which in turn, processes and adjusts these signals, filters them and adapts them to the input configuration of a processor with a software application making possible to estimate the carbon dioxide equivalent emissions associated to that consumption, transmitting the processed signals to other systems by interfaces generating digital data, instantaneous or cumulative, as well as to an output port which sends through a communication protocol the information to a remote recording and processing central.

   2) INSTANTANEOUS COUNTING DYNAMIC SYSTEM AND PERIODIC CUMULATIVE SPACE-TIME RECORD OF CARBON DIOXIDE EQUIVALENT EMISSIONS, according to claim number one, **characterized by** the software device estimates the carbon dioxide equivalent emissions according to a formula which considers the energy resource consumption and multiplies it by carbon dioxide ($CO_2$), methane ($CH_4$) and nitrous oxide ($N_2O$) emission factors in $CO_2e$ units (taking into account the respective global warming potentials) corresponding to the burning of fossil fuels or the electric grid emission factor to which the equipment, device or electric meter is connected to.

   3) INSTANTANEOUS COUNTING DYNAMIC SYSTEM AND PERIODIC CUMULATIVE SPACE-TIME RECORD OF CARBON DIOXIDE EQUIVALENT EMISSIONS, according to claim number one, **characterized by** collecting carbon dioxide emission data for each device, vehicle or installation at individual level.

   4) INSTANTANEOUS COUNTING DYNAMIC SYSTEM AND PERIODIC CUMULATIVE SPACE-TIME RECORD OF CARBON DIOXIDE EQUIVALENT EMISSIONS, according to claim number one, **characterized by** it allows the data obtained from measurements to correlate with the moment when and the place where the events occur, which will then be accumulated for a detailed analysis.

   5) INSTANTANEOUS COUNTING DYNAMIC SYSTEM AND PERIODIC CUMULATIVE SPACE-TIME RECORD OF CARBON DIOXIDE EQUIVALENT EMISSIONS, according to claim number one, **characterized by** transmitting data collected instantly to a processing central able to receive multiple individual data.

   6) INSTANTANEOUS COUNTING DYNAMIC SYSTEM AND PERIODIC CUMULATIVE SPACE-TIME RECORD OF CARBON DIOXIDE EQUIVALENT EMISSIONS, according to claim number one, **characterized by** using a methodology of analysis on particular data ("bottom-up" methodology) to reach general conclusions.

Fig. 1

**Europäisches Patentamt**
**European Patent Office**
**Office européen des brevets**

# EUROPEAN SEARCH REPORT

Application Number

EP 11 00 4874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/255899 A1 (MCCONNELL ROBERT [US] ET AL MCCONNELL ROBERT S [US] ET AL) 16 October 2008 (2008-10-16) | 1-6 | INV. G01D4/00 G06Q10/00 |
| Y | * paragraph [0098] - paragraph [0181]; figures 1,2,10 * | 1-6 | |
| X | GB 2 445 602 A (WALDEN PETER JOHN [GB]) 16 July 2008 (2008-07-16) | 1 | |
| Y | * the whole document * | 1-6 | |
| X | US 2009/219145 A1 (WONG WAI-MAN [US] ET AL) 3 September 2009 (2009-09-03) | 1 | |
| Y | * the whole document * | 1-6 | |

| | TECHNICAL FIELDS SEARCHED (IPC) |
|---|---|
| | G01D G06Q |

The present search report has been drawn up for all claims

| Place of search | Date of completion of the search | Examiner |
|---|---|---|
| Munich | 16 December 2011 | Kallinger, Christian |

EPO FORM 1503 03.82 (P04C01)

**ANNEX TO THE EUROPEAN SEARCH REPORT
ON EUROPEAN PATENT APPLICATION NO.**

EP 11 00 4874

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2011

| Patent document cited in search report | | Publication date | Patent family member(s) | | Publication date |
|---|---|---|---|---|---|
| US 2008255899 | A1 | 16-10-2008 | US 2008255899 A1 | | 16-10-2008 |
| | | | US 2011087508 A1 | | 14-04-2011 |
| GB 2445602 | A | 16-07-2008 | NONE | | |
| US 2009219145 | A1 | 03-09-2009 | NONE | | |

EPO FORM P0459

For more details about this annex : see Official Journal of the European Patent Office, No. 12/82